# EUROPÄISCHE PATENTSCHRIFT

(11) **EP 3 336 369 B1**
(45) Veröffentlichungstag und Bekanntmachung des Hinweises auf die Patenterteilung: **29.05.2019**
(21) Anmeldenummer: 17206193.9
(22) Anmeldetag: 08.12.2017
(51) Int. Cl.: F16C 11/06

(54) **BEFESTIGUNGSSYSTEM**
FASTENING SYSTEM
SYSTÈME DE FIXATION

(30) Priorität: 13.12.2016 DE 102016224806
(43) Veröffentlichungstag der Anmeldung: 20.06.2018
(73) Patentinhaber: Hansgrohe SE, 77761 Schiltach (DE)
(72) Erfinder: Kronenbitter, Bernd, 77787 Nordrach (DE); Schönweger, Alois, 77761 Schiltach (DE); Stulz, Thomas, 77709 Oberwolfach (DE)
(74) Vertreter: Patentanwälte Ruff, Wilhelm, Beier, Dauster & Partner mbB

(56) Entgegenhaltungen:
- US-A- 5 775 654

## Beschreibung

Die Erfindung betrifft ein Befestigungssystem zum Befestigen eines mit einer Befestigungsnut versehenen ersten Bauteils an einem zweiten Bauteil. Das Befestigungssystem umfasst eine Kugelkopfschraube, die ein Gewinde und einen Kugelkopf aufweist, einen auf das Gewinde aufschraubbaren Nutenstein, der zum Einfügen in die Befestigungsnut des ersten Bauteils eingerichtet ist, und ein Befestigungsstück, das eine Kugelkopfaufnahme und eine ebene Befestigungsauflagefläche für das Befestigen des Befestigungsstücks an dem zweiten Bauteil aufweist, wobei die Kugelkopfaufnahme den Kugelkopf unter Bildung eines Kugelgelenks aufnimmt. Mit diesem Befestigungssystem lassen sich die beiden Bauteile unter Nutzung des Kugelgelenks flexibel in unterschiedlichen Orientierungen miteinander verbinden.

Die Offenlegungsschrift DE 39 27 653 A1 offenbart ein Befestigungssystem dieser Art, das zur biegemomentfreien Lagerung von Wand- oder Deckenplatten an mit einer Befestigungsnut versehenen Montageschienen dient. Als Befestigungsauflagefläche fungiert ein Auflageteller, der in einer Mittenstellung des Kugelgelenks senkrecht zu einer Längsachse der Kugelkopfschraube orientiert ist. Das Kugelgelenk ist allseitig, aber begrenzt um einen Kippwinkel verschwenkbar, wie er für den gewünschten Biegemomentausgleich ausreicht.

Die Patentschrift US 2 752 116 offenbart ein Kamerastativ mit einem Dreibein, das oben mit einem Teller abschließt, einem auf dem Teller montierten Vertikalrohr, das an einem oberen Stirnende eine Kugelkopfaufnahme mit vier seitlichen Aussparungen aufweist, und einer Kugelkopfschraube, die ein Gewinde zum Aufschrauben einer Kamera und einen Kugelkopf umfasst, der von der Kugelkopfaufnahme unter Bildung eines Kugelgelenks aufgenommen ist. In der Mittenstellung des Kugelgelenks fällt die Längsachse der Kugelkopfschraube mit der Längsachse des Vertikalrohrs zusammen.

Weitere Kamerastative mit Kugelkopf-Kamerahalterung sind in den Offenlegungsschriften DE 10 2004 049 467 A1 und DE 2 048 592 A offenbart.

Die Gebrauchsmusterschrift DE 93 07 092 U1 offenbart ein Spannsystem mit einer Aufspannplatte und Positionierelementen zum exakten Positionieren eines Werkzeugs oder dgl. Die Positionierelemente können ein Fußteil umfassen, das am unteren Ende einen Nutenstein zum Befestigen in einer Nut der Aufspannplatte und am oberen Ende ein Kugelgelenk mit einem schienenförmigen Klemmschraubenelement aufweist.

Die Offenlegungsschrift US 2002/0166936 A1 offenbart eine spezielle Montagevorrichtung mit einer nabenartig zwangsgeführten Kugellagerung, die eine begrenzte Verschwenkbarkeit z.B. innerhalb eines kegelförmigen Verstellbereichs zulässt.

Der Erfindung liegt das technische Problem zugrunde, ein Befestigungssystem der eingangs genannten Art bereitzustellen, das eine funktionssichere Befestigung zweier Bauteile miteinander herstellt, wenig Teile erfordert und hinsichtlich Herstellkosten und Montageaufwand vorteilhaft ist.

Die Erfindung löst dieses Problem durch die Bereitstellung eines Befestigungssystems mit den Merkmalen des Anspruchs 1. Vorteilhafte sowie bevorzugte Ausgestaltungen der Erfindung sind Gegenstände der weiteren Ansprüche, deren Wortlaut hiermit durch Verweis vollumfänglich in die Beschreibung aufgenommen wird.

Bei dem erfindungsgemäßen Befestigungssystem ist die Befestigungsauflagefläche in einer Mittenstellung des Kugelgelenks parallel und versetzt zu einer Längsachse der Kugelkopfschraube. Außerdem weist die Kugelkopfaufnahme eine Mehrzahl von Aussparungsabschnitten zum Aufnehmen eines an den Kugelkopf anschließenden Schraubenabschnitts der Kugelkopfschraube in zugehörigen Stellungen der Kugelkopfschraube auf, wobei ein Kippwinkel zwischen der Längsachse der Kugelkopfschraube in der Mittenstellung und der Längsachse der Kugelkopfschraube in der vom Aussparungsabschnitt aufgenommenen Stellung mindestens 90° beträgt. Damit stellt die Erfindung ein Befestigungssystem zur Verfügung, das eine funktionssichere und lageflexible Befestigung zweier Bauteile aneinander ermöglicht, wobei das Befestigungssystem mit wenigen Teilen auskommt und hinsichtlich Herstellkosten und Montageaufwand vorteilhaft ist.

Die Befestigungsnut kann beispielsweise ein Langloch oder eine Nut, insbesondere eine T-Nut oder eine trapezförmige Nut, sein. Der aufschraubbare Nutenstein kann zum Beispiel eine Mutter oder eine Kombination aus Mutter und Unterlegscheibe oder ein Nutenstein, der ein Innengewinde aufweist, sein. Der maximal mögliche Kippwinkel der Kugelkopfschraube kann beispielsweise zwischen 90° und 120° betragen. Es können beispielsweise zwei, drei, vier oder noch mehr Aussparungsabschnitte vorgesehen sein. Das zweite Bauteil kann an der Befestigungsauflagefläche beispielsweise stoffschlüssig oder formschlüssig verbunden sein.

In einer Ausgestaltung der Erfindung ist eine Nutauflage an der Kugelkopfschraube zwischen dem Kugelkopf und dem diesem gegenüberliegenden Kugelkopfschraubenende angeordnet. Die Nutauflage kann zum Beispiel scheibenförmig sein. Die Nutauflage kann z.B. eine sechseckige Geometrie aufweisen, die dazu ausgebildet ist, einen Gabelschlüssel aufzunehmen.

In einer Ausgestaltung der Erfindung sind die Kugelkopfschraube und die Nutauflage einteilig oder die Nutauflage ist auf die Kugelkopfschraube aufschraubbar. Indem die Kugelkopfschraube und die Nutauflage einteilig ausgeführt sind, reduziert sich die benötigte Bauteilanzahl und somit der Montageaufwand. Die Nutauflage kann zum Beispiel ein Bauelement sein, das ein Innengewinde aufweist, wobei das Innengewinde der Nutauflage mit dem Gewinde der Kugelschraube korrespondiert. Die Nutauflage kann zum Beispiel eine Mutter oder eine Kombination aus Mutter und Unterlegscheibe sein, wobei die Mutter auf das Gewinde der Kugelkopfschraube aufgeschraubt ist.

In einer Ausgestaltung der Erfindung ist der Kugelkopf von der Kugelkopfaufnahme mit einer lösbaren Rastverbindung aufgenommen. Die lösbare Rastverbindung erleichtert es z.B., dass die Kugelkopfschraube oder das Befestigungsstück unabhängig vom jeweils anderen Teil an dem zweiten bzw. ersten Bauteil befestigt werden kann und erst danach das Zusammenfügen durch einfaches Verrasten erfolgt. Die Rastverbindung kann zum Beispiel Rastelemente aufweisen, die dazu ausgebildet sind den Kugelkopf zu umfassen. Zudem erlaubt die Lösbarkeit der Rastverbindung bei Bedarf eine entsprechende Demontage.

In einer Ausgestaltung der Erfindung weist das Befestigungsstück einen Befestigungsabschnitt auf, von dem eine erste Seite mindestens einen Teil der Befestigungsauflagefläche aufweist und eine zweite Seite mindestens einen Teil einer zweiten Befestigungsauflagefläche aufweist. Indem der Befestigungsabschnitt zwei Befestigungsauflageflächen aufweist, erhöht sich die Anzahl von möglichen Befestigungspositionen des Befestigungsstücks an dem zweiten Bauteil.

In einer Ausgestaltung der Erfindung weist das Befestigungsstück ein Durchgangsloch und/oder ein Gewinde auf. Das Durchgangsloch kann in Form einer Senkbohrung ausgeführt sein. Das Gewinde und/oder das Durchgangsloch kann beispielsweise dazu geeignet sein, eine Schraubbolzenverbindung oder eine andere bolzenbasierte Verbindung zwischen dem Befestigungsstück und dem zweiten Bauteil herzustellen. Das Befestigungsstück kann z.B. eine Bohrung aufweisen. Das Durchgangsloch und/oder die Bohrung können beispielsweise dazu ausgebildet sein, als Montagehilfe oder Montageorientierung zu dienen. Unter Bohrung kann eine beliebige Öffnung verstanden werden.

In einer Ausgestaltung der Erfindung weist das Befestigungsstück mindestens eine Aufnahmenut, insbesondere zwei Aufnahmenuten, auf. Die Aufnahmenut kann beispielsweise dazu ausgebildet sein, das zweite Bauteil oder ein drittes Bauteil aufzunehmen und/oder zu führen. Die Aufnahmenut kann beispielsweise dazu ausgebildet sein, als Montagehilfe oder Montageorientierung zu dienen.

In einer Ausgestaltung der Erfindung weist die Kugelkopfaufnahme vier Aussparungsabschnitte auf, die in einem Winkel von 90° zueinander angeordnet sind. Die Aussparungsabschnitte können derart gestaltet sein, dass ein sich an den Kugelkopf anschließender Schraubenabschnitt in diesen Aussparungsabschnitten aufgenommen werden kann. Die Aussparungsabschnitte können dazu ausgebildet sein, die Drehbeweglichkeit der Kugelkopfschraube innerhalb der Kugelkopfaufnahme einzuschränken. Eine Verbindungsachse zwischen zwei Aussparungsabschnitten kann z.B. parallel zur Befestigungsauflagefläche sein.

In einer Ausgestaltung der Erfindung weist das Befestigungsstück eine Ausnehmung zum Aufnehmen der Nutauflage in einer zugehörigen Stellung auf. Das Befestigungsstück kann z.B. als Abdeckkappe der Nutauflage oder Sichtschutz wirken.

Vorteilhafte Ausführungsformen der Erfindung sind in den Zeichnungen dargestellt und werden im Folgenden näher erläutert. Hierbei zeigen:
- Fig. 1: eine Schrägansicht eines Befestigungssystems in Mittenstellung,
- Fig. 2 bis 4: Schrägansichten des Befestigungssystems von Fig. 1 in jeweils um 90° gegenüber der Mittenstellung verkippten Stellungen,
- Fig. 5: eine Schrägansicht des Befestigungssystems und von zwei dadurch miteinander befestigten Bauteilen und
- Fig. 6 bis 8: Schrägansichten des Befestigungssystems entsprechend Fig. 5 in weiteren Befestigungssituationen.

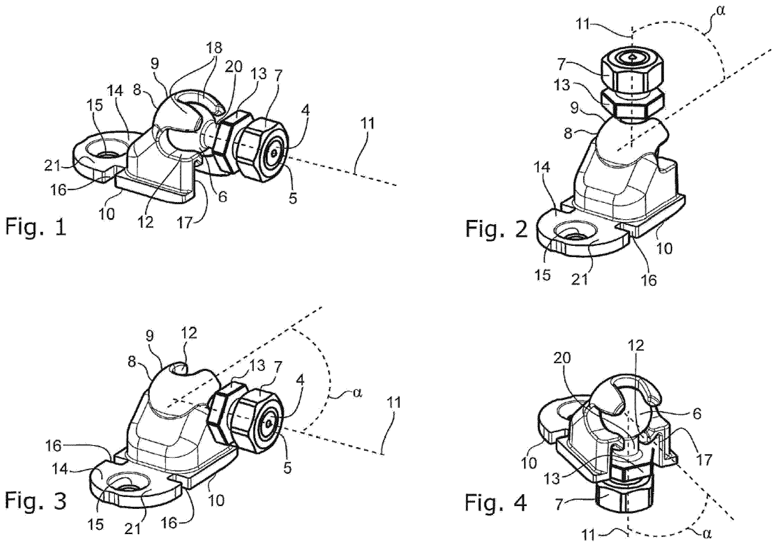

Das in Fig. 1 bis 8 gezeigte Befestigungssystem ist dazu ausgebildet, ein mit einer Befestigungsnut 1 versehenes erstes Bauteil 2 an einem zweiten Bauteil 3 zu befestigen. Das gezeigte erste Bauteil 2 weist einen Montageschienenbereich auf, der über seine gesamte Länge die Befestigungsnut 1 aufweist. Das zweite Bauteil 3 weist eine ebene Fläche auf, an der das Befestigungssystem angebracht werden kann.

Die Fig. 1 bis 4 zeigen das Befestigungssystem, welches dazu ausgebildet ist, das erste Bauteil 2 mit dem zweiten Bauteil 3 zu verbinden. Das Befestigungssystem verfügt über eine Kugelkopfschraube 4 und ein Befestigungsstück 8. Die Kugelkopfschraube 4 weist ein Gewinde 5 und einen Kugelkopf 6 auf. Zwischen dem Kugelkopf 6 und einem diesem bezüglich einer Längsachse 11 der Kugelkopfschraube 4 gegenüberliegenden Kugelkopfschraubenende ist eine Nutauflage 13 an der Kugelkopfschraube 4 angeordnet. Die Kugelkopfschraube 4 und die Nutauflage 13 sind bevorzugt einteilig ausgeführt. In einer nicht gezeigten Ausführung ist die Nutauflage 13 auf das Gewinde 5 der Kugelkopfschraube 4 aufschraubbar. Die Nutauflage 13 weist z.B. eine Sechskantgeometrie, alternativ eine andere polygonale Form, auf, die dazu ausgebildet ist, einen Gabelschlüssel oder ein ähnliches Werkzeug aufzunehmen. Zwischen dem Kugelkopf 6 und der Nutauflage 13 ist ein Schaftabschnitt 20 der Kugelkopfschraube 4 angeordnet.

Auf dem Gewinde 5 der Kugelkopfschraube 4 ist ein aufschraubbarer Nutenstein 7 in Form einer Mutter aufgeschraubt. Der Nutenstein 7 ist zum Einfügen in die Befestigungsnut 1 des ersten Bauteils 2 eingerichtet.

Der Kugelkopf 6 ist in einer Kugelkopfaufnahme 9 des Befestigungsstücks 8 aufgenommen, vorzugsweise wie gezeigt durch eine lösbare Rastverbindung. Hierfür verfügt die Kugelkopfaufnahme 9 über zwei Rastnasen 18, die den Kugelkopf 6 übergreifen. Die Kugelkopfaufnahme 9 nimmt den Kugelkopf 6 unter Bildung eines Kugelgelenks auf.

Des Weiteren weist das Befestigungsstück 8 einen Befestigungsabschnitt 21, eine ebene erste Befestigungsauflagefläche 10 und eine ebene zweite Befestigungsauflagefläche 14 auf. Der Befestigungsabschnitt 21 weist an einer ersten Seite einen Teil der ersten Befestigungsauflagefläche 10 und an einer gegenüberliegenden zweiten Seite die zweite Befestigungsauflagefläche 14 auf. Die zweite Befestigungsauflagefläche 14 ist parallel zur ersten Befestigungsauflagefläche 10. Die zweite Befestigungsauflagefläche 14 weist einen Anschlag auf. Die erste und zweite Befestigungsauflagefläche 10, 14 sind dazu ausgebildet, einen jeweiligen Anlagekontakt zu einer ebenen Fläche des zweiten Bauteils 3 herzustellen. Darüber hinaus verfügt der Befestigungsabschnitt 21 über ein Durchgangsloch 15 in Form einer Senkbohrung und zwei sich gegenüberliegende Aufnahmenuten 16. Das Durchgangsloch 15 ist dazu ausgebildet, eine Schraube aufzunehmen, um so das Befestigungssystem mittels einer Schraubverbindung am zweiten Bauteil 3 zu befestigen. Die Aufnahmenuten 16 sind dazu ausgebildet, ein drittes Bauteil 19 beispielsweise als Montagehilfe aufzunehmen.

Das Befestigungsstück 8 weist eine Ausnehmung 17 auf, die dazu ausgebildet ist, die Nutauflage 13 aufzunehmen, wenn die Kugelkopfschraube 4 und das Befestigungsstück 8 entsprechend gegeneinander verkippt werden. Dies ist die in Fig. 4 gezeigte Kippstellung. Die Ausnehmung 17 hat die Gestalt einer Schlüsselfläche eines Gabelschlüssels, so dass eine Schraubverbindung zwischen dem Nutenstein 7 in der Befestigungsnut 1 und der Kugelkopfschraube 4 ohne die Verwendung von zusätzlichem Werkzeug hergestellt bzw. angezogen und wieder gelöst werden kann. Dies erfolgt, indem das Befestigungsstück 8 in dieser Stellung gedreht wird, wobei die in der Ausnehmung 17 aufgenommene Nutauflage 13 und die Kugelkopfschraube 4 über die Nutauflage 13 mitgedreht wird.

In Fig. 1 ist eine Mittenstellung des Kugelgelenks gezeigt, in welcher die Längsachse 11 parallel und versetzt zur ersten Befestigungsauflagefläche 10 ist. Die Kugelkopfaufnahme 9 weist vier Aussparungsabschnitte 12 zum Aufnehmen des Schaftabschnitts 20 auf, wobei drei Aussparungsabschnitte 12 von den Rastnasen 18 begrenzt sind. Die vier Aussparungsabschnitte 12 sind dazu ausgebildet, die Bewegungsfreiheit der Kugelkopfschraube 4 entsprechend zu definieren, wobei sie in einer Kugelgelenk-Umfangsrichtung in einem Winkel von 90° zueinander versetzt angeordnet sind. Die Orientierung der Längsachse 11 in einer jeweiligen Kippstellung der Kugelkopfschraube 4 bezogen auf die Mittenstellung ist durch einen Kippwinkel α angegeben.

In den Fig. 2 bis 4 ist der Schaftabschnitt 20 der Kugelkopfschraube 4 jeweils in einem der vier Aussparungsabschnitte 12 des Befestigungssystems aufgenommen. In jeder der gezeigten Stellungen der Kugelkopfschraube 4 beträgt der Kippwinkel α der Längsachse 11 bezüglich der Mittenstellung 90°. Darüber hinaus ist in Fig. 4 die Nutauflage 13 von der Ausnehmung 17 aufgenommen und die Längsachse 11 ist orthogonal zur ersten Befestigungsauflagefläche 10 orientiert.

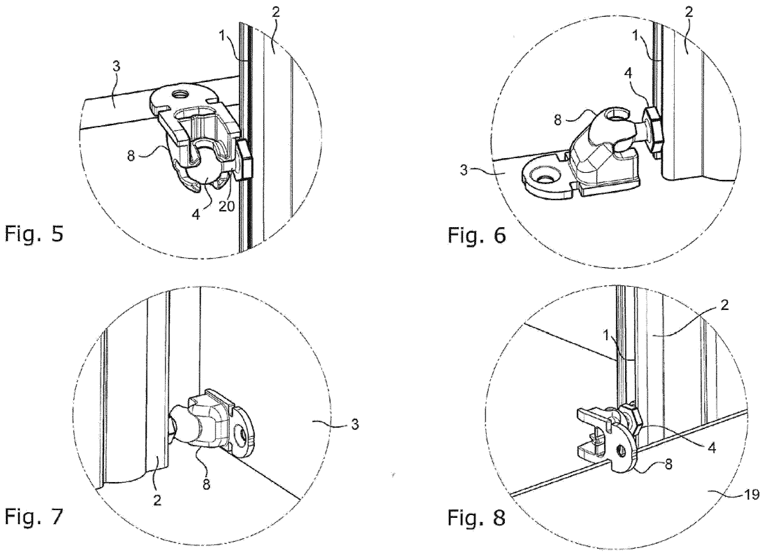

Fig. 5 zeigt eine Verbindung zwischen dem ersten Bauteil 2 und dem zweiten Bauteil 3 durch das Befestigungssystem in einer ersten Orientierung. Dabei ist der Nutenstein 7 in die Befestigungsnut 1 des ersten Bauteils 2 eingefügt und wirkt zusammen mit der Kugelkopfschraube 4 als Schraubverbindung. Die Kugelkopfschraube 4 ist gegenüber dem Befestigungsstück um ca. 90° bzgl. der Mittenstellung verkippt. Das zweite Bauteil 3 liegt gegen die zweite Befestigungsauflagefläche 14 des Befestigungsstücks 8 an. Das zweite Bauteil 3 ist mit der zweiten Befestigungsauflagefläche 14 durch eine stoffschlüssige Verbindung, insbesondere eine Klebeverbindung, verbunden. Der Schaftabschnitt 20 ist in einem der Aussparungsabschnitte 12 aufgenommen. Zusätzlich oder alternativ zu der Klebeverbindung kann das Befestigungsstück 8 mittels einer in das Durchgangsloch 15 eingefügten Schraube an das zweite Bauteil 3 angeschraubt sein.

Die Fig. 6 und 7 zeigen eine Verbindung zwischen dem ersten Bauteil 2 und dem zweiten Bauteil 3 durch das Befestigungssystem in einer anderen Orientierung. Hier liegt das zweite Bauteil 3 gegen die erste Befestigungsauflagefläche 10 des Befestigungsstücks 8 an. In Fig. 6 befindet sich das Befestigungssystem in etwa in der Mittenstellung seines Kugelgelenks, wobei in Fig. 7 die Kugelkopfschraube 4 um ca. 90° bzgl. der Mittenstellung verkippt ist.

Fig. 8 zeigt eine Aufnahme des dritten Bauteils 19 in der Aufnahmenut 16. Das dritte Bauteil 19 ist für das Ausrichten des Befestigungsstücks 8 in der Aufnahmenut 16 aufgenommen. Mit dem so ausgerichteten Befestigungsstück 8 kann das in Fig. 8 nicht gezeigte zweite Bauteil 3 verbunden werden.

Bei dem ersten Bauteil 2 kann es sich z.B. um eine Schlauchrollenbox handeln, wie sie in der älteren deutschen Patentanmeldung 10 2015 226 412.2 offenbart ist.

Bei dem zweiten Bauteil 3 und dem dritten Bauteil 19 kann es sich in diesem Fall z.B. um Wände eines Waschtisch- oder Küchenspülen-Unterbaus handeln, in welchem die Schlauchrollenbox untergebracht ist, wie eine Rückwand, eine Bodenwand und/oder eine Seitenwand desselben.

In einer nicht gezeigten Ausführung der Erfindung weist das Befestigungsstück 8 ein Gewinde und/oder eine Bohrung auf. Das Gewinde kann beispielsweise genutzt werden, um das Befestigungsstück 8 mit dem zweiten Bauteil 3 zu verschrauben. Die Bohrung kann beispielsweise genutzt werden, um das Befestigungsstück 8 am zweiten Bauteil 3 auszurichten.

Wie die oben erläuterten Ausführungsbeispiele verdeutlichen, stellt die Erfindung ein Befestigungssystem zur Verfügung, welches die funktionssichere und lageflexible Befestigung zweier Bauteile aneinander ermöglicht. Das Befestigungssystem selbst weist eine geringe Anzahl von Teilen auf und ist hinsichtlich Herstellkosten und Montageaufwand vorteilhaft.

## Patentansprüche

1. Befestigungssystem zum Befestigen eines mit einer Befestigungsnut (1) versehenen ersten Bauteils (2) an einem zweiten Bauteil (3), mit
- einer Kugelkopfschraube (4), die ein Gewinde (5) und einen Kugelkopf (6) aufweist,
- einem auf das Gewinde aufschraubbaren Nutenstein (7), der zum Einfügen in die Befestigungsnut des ersten Bauteils eingerichtet ist, und
- einem Befestigungsstück (8), das eine Kugelkopfaufnahme (9) und eine ebene Befestigungsauflagefläche (10) für das Befestigen des Befestigungsstücks an dem zweiten Bauteil aufweist,
- wobei die Kugelkopfaufnahme den Kugelkopf unter Bildung eines Kugelgelenks aufnimmt,
**dadurch gekennzeichnet, dass**
- die Befestigungsauflagefläche (10) in einer Mittenstellung des Kugelgelenks parallel und versetzt zu einer Längsachse (11) der Kugelkopfschraube (4) ist und
- die Kugelkopfaufnahme (9) eine Mehrzahl von Aussparungsabschnitten (12) zum Aufnehmen eines an den Kugelkopf (6) anschließenden Schraubenabschnitts der Kugelkopfschraube in zugehörigen Stellungen der Kugelkopfschraube aufweist, wobei ein Kippwinkel (α) zwischen der Längsachse der Kugelkopfschraube in der Mittenstellung und der Längsachse der Kugelkopfschraube in der vom Aussparungsabschnitt aufgenommenen Stellung mindestens 90° beträgt.

2. Befestigungssystem nach Anspruch 1, **dadurch gekennzeichnet, dass** eine Nutauflage (13) an der Kugelkopfschraube zwischen dem Kugelkopf und dem diesem gegenüberliegenden Kugelkopfschraubenende angeordnet ist.

3. Befestigungssystem nach Anspruch 2, **dadurch gekennzeichnet, dass** die Kugelkopfschraube und die Nutauflage einteilig sind oder die Nutauflage auf die Kugelkopfschraube aufschraubbar ist.

4. Befestigungssystem nach einem der vorherigen Ansprüche, **dadurch gekennzeichnet, dass** die Kugelkopfaufnahme den Kugelkopf mit einer lösbaren Rastverbindung aufnimmt.

5. Befestigungssystem nach einem der vorherigen Ansprüche, **dadurch gekennzeichnet, dass** das Befestigungsstück einen Befestigungsabschnitt (21) aufweist, von dem eine erste Seite mindestens einen Teil der Befestigungsauflagefläche aufweist und eine zweite Seite mindestens einen Teil einer zweiten Befestigungsauflagefläche (14) aufweist.

6. Befestigungssystem nach einem der vorherigen Ansprüche, **dadurch gekennzeichnet, dass** das Befestigungsstück ein Durchgangsloch (15) und/oder ein Gewinde aufweist.

7. Befestigungssystem nach einem der vorherigen Ansprüche, **dadurch gekennzeichnet, dass** das Befestigungsstück mindestens eine Aufnahmenut (16) aufweist.

8. Befestigungssystem nach einem der vorherigen Ansprüche, **dadurch gekennzeichnet, dass** die Kugelkopfaufnahme vier Aussparungsabschnitte aufweist, die in einem Winkel von 90° zueinander angeordnet sind.

9. Befestigungssystem nach einem der Ansprüche 2 bis 8, **dadurch gekennzeichnet, dass** das Befestigungsstück eine Ausnehmung (17) zum Aufnehmen der Nutauflage in einer zugehörigen Stellung aufweist.

## Claims

1. Fixation system for fixing a first component (2) provided with a fixing groove (1) to a second component (3), comprising
- a ball-head screw (4) having a thread (5) and a ball head (6),
- a slot nut (7) to be screwed onto the thread, configured for inserting into the fixing groove of the first component, and
- a fixation part (8) having a ball head seat (9) and a planar fixation support surface (10) for fixing the fixation part to the second component,
- wherein the ball head seat receives the ball head, thereby forming a ball joint,
**characterized in that**
- in a central position of the ball joint, the fixation support surface (10) is in parallel and offset in relation to a longitudinal axis (11) of the ball-head screw (4), and
- the ball-head seat (9) includes a plurality of recessed portions (12) for receiving a screw portion of the ball-head screw adjoining the ball head (6) in corresponding positions of the ball-head screw, wherein an inclination angle (α) between the longitudinal axis of the ball-head screw in the central position and the longitudinal axis of the ball-head screw in the position when received in the recessed portion is at least 90°.

2. Fixation system according to claim 1, **characterized in that** a nut seating (13) is disposed on the ball-head screw between the ball head and the ball-head screw end opposite thereto.

3. Fixation system according to claim 2, **characterized in that** the ball-head screw and the nut seating are in one piece or the nut seating can be screwed onto the ball-head screw.

4. Fixation system according to any of the preceding claims, **characterized in that** the ball-head seat receives the ball head in a releasable snap-lock connection.

5. Fixation system according to any of the preceding claims, **characterized in that** the fixation part includes a fixation portion (21), wherein a first side thereof includes at least part of the fixation support surface and a second side includes at least part of a second fixation support surface (14).

6. Fixation system according to any of the preceding claims, **characterized in that** the fixation part includes a through hole (15) and/or a thread.

7. Fixation system according to any of the preceding claims, **characterized in that** the fixation part includes at least one receiving groove (16).

8. Fixation system according to any of the preceding claims, **characterized in that** the ball head seat includes four recessed portions, disposed at an angle of 90° in relation to each other.

9. Fixation system according to any of claims 2 to 8, **characterized in that** the fixation part includes a recess (17) for receiving the nut seating in a corresponding position.

## Revendications

1. Système de fixation permettant la fixation d'une première pièce structurale (2) pourvue d'une rainure de fixation (1) à une deuxième pièce structurale (3), comprenant
- une vis à tête sphérique (4), qui présente un filet (5) et une tête sphérique (6),
- un écrou pour rainure (7) qui peut être vissé au filet et qui est destiné à être inséré dans la rainure de fixation de la première pièce structurale, et
- une pièce de fixation (8), qui présente un logement de tête sphérique (9) et une surface d'appui de fixation plate (10) pour la fixation de la pièce de fixation à la deuxième pièce structurale,
- dans lequel le logement de tête sphérique loge la tête sphérique, ce qui entraîne la formation d'une articulation à rotule,
**caractérisé en ce que**
- la surface d'appui de fixation (10) se situe dans une position centrale de l'articulation à rotule parallèlement à un axe longitudinal (11) de la vis à tête sphérique (4) et décalée de celle-ci et
- le logement de tête sphérique (9) présente une pluralité de sections évidées (12) destinées à loger une partie de la vis à tête sphérique, laquelle partie se trouve dans le prolongement de la tête sphérique (6), dans des positions associées de la vis à tête sphérique, dans lequel un angle d'inclinaison (α) entre l'axe longitudinal de la vis à tête sphérique dans la position centrale et l'axe longitudinal de la vis à tête sphérique dans la position logée par la section évidée atteint au moins 90°.

2. Système de fixation selon la revendication 1, **caractérisé en ce qu'**un appui de rainure (13) est agencé sur la vis à tête sphérique entre la tête sphérique et l'extrémité de vis à tête sphérique opposée à celle-ci.

3. Système de fixation selon la revendication 2, **caractérisé en ce que** la vis à tête sphérique et l'appui de rainure sont d'une seule pièce ou l'appui de rainure peut être vissé à la vis à tête sphérique.

4. Système de fixation selon l'une quelconque des revendications précédentes, **caractérisé en ce que** le logement à tête sphérique loge la tête sphérique au moyen d'une liaison par encliquetage libérable.

5. Système de fixation selon l'une quelconque des revendications précédentes, **caractérisé en ce que** la pièce de fixation présente une section de fixation (21), dont une première face présente au moins une partie de la surface d'appui de fixation et une deuxième face présente au moins une partie d'une deuxième surface d'appui de fixation (14).

6. Système de fixation selon l'une quelconque des revendications précédentes, **caractérisé en ce que** la pièce de fixation présente un trou de passage (15) et/ou un filet.

7. Système de fixation selon l'une quelconque des revendications précédentes, **caractérisé en ce que** la pièce de fixation présente au moins une rainure de logement (16).

8. Système de fixation selon l'une quelconque des revendications précédentes, **caractérisé en ce que** le logement de tête sphérique présente quatre sections évidées qui sont situées les unes par rapport aux autres en formant un angle de 90°.

9. Système de fixation selon l'une quelconque des revendications 2 à 8, **caractérisé en ce que** la pièce de fixation présente un évidement (17) destiné à loger l'appui de rainure dans une position associée.
